# EUROPÄISCHE PATENTANMELDUNG

(11) **EP 3 702 339 A1**
(43) Veröffentlichungstag der Anmeldung: **02.09.2020**
(21) Anmeldenummer: 19160201.0
(22) Anmeldetag: 01.03.2019
(51) Int. Cl.: C04B 28/04, C04B 28/06, C04B 40/06, C04B 111/62

(54) **STAUBFREIE SELBSTVERLAUFENDE SPACHTELMASSE**

(71) Anmelder: Uzin Utz AG, 89079 Ulm (DE)
(72) Erfinder: Jöchle, Timo, 89150 Laichingen (DE); Gretz, Markus, 89312 Günzburg (DE); Tsalos, Johannis, 89081 Ulm (DE)
(74) Vertreter: Isarpatent

(57) **Zusammenfassung**

Die vorliegende Erfindung betrifft einen Kit zur Herstellung einer gebrauchsfertigen, selbstverlaufenden, zementären Spachtelmasse sowie ein Verfahren zur staubfreien Herstellung derselben. Die vorliegende Erfindung betrifft weiterhin die Verwendung eines solchen Kits zur Herstellung einer Spachtelschicht.

## Beschreibung

### Gebiet der Erfindung

Die vorliegende Erfindung betrifft einen Kit zur Herstellung einer gebrauchsfertigen, selbstverlaufenden, zementären Spachtelmasse sowie ein Verfahren zur staubfreien Herstellung derselben. Die vorliegende Erfindung betrifft weiterhin die Verwendung eines solchen Kits zur Herstellung einer Spachtelschicht.

### Technischer Hintergrund

Bei Verlegearbeiten, im Neubau sowie bei Renovierungen, von Bodenbelägen ist oftmals die Anwendung einer selbstverlaufenden Spachtelmasse zur Untergrundvorbereitung notwendig. Der Begriff "Spachtelmasse", wie hierin verwendet, bedeutet im Folgenden zementäre, selbstverlaufende Spachtelmasse.

Grundsätzlich wird zwischen selbstverlaufenden (selbstnivellierenden) Spachtelmassen und standfesten (nicht selbstverlaufenden) Spachtelmassen über das Kriterium des Fließverhaltens unterschieden. Das Fließverhalten von selbstverlaufenden Spachtelmassen wiederum wird über das Ausbreitmaß bestimmt.

Selbstverlaufende Spachtelmassen dienen vor allem zur voll- und großflächigen Anwendung. Sie weisen bereits in dünnen Schichten einen sehr guten Selbstverlauf auf, welchen standfeste Spachtelmassen nicht gewährleisten können, und sind deshalb nicht zur Beibehaltung oder Herstellung eines Gefälles geeignet. Um eine bestimmte gleichmäßige Schichtdicke zu erreichen und auf größeren Flächen die Verarbeitung zu erleichtern, empfiehlt es sich, selbstverlaufende Spachtelmassen mit einem geeigneten Zahnspachtel oder -rakel aufzubringen.

Im Gegensatz hierzu können standfeste Spachtelmassen sowohl zum Glätten von Untergründen mit bestehendem Gefälle als auch zur Herstellung von Gefällen verwendet werden. Standfeste Spachtelmassen dienen bevorzugt für teilflächige Spachtelungen mit größeren Schichtdickenunterschieden auf kurzem Nennmaß, z.B. zum Füllen von Löchern, zum Höhenausgleich, für Reparaturen u.ä.

Spachtelmassen sind Werktrockenmörtel, die geeignet sind nach dem Anmischen mit Wasser und einer sach- und fachgerechten Spachtelung, eine ebene Oberfläche bereitzustellen, auf der verschiedenste Beläge (PVC, CV, Parkett, Fliesen usw.) aufgebracht werden können. Mit Werktrockenmörtel sind in diesem Fall pulverförmige Systeme gemeint, welche nach dem Anmischen mit Wasser, z.B. über Kristallisationsreaktionen hydraulisch aushärten und ein festes und belastbares Gefüge ausbilden. Für die Festigkeitsentwicklung sind dabei mineralische Bindemittel wie beispielsweise Zemente oder Gipse in verschiedensten Arten und Kombinationen notwendig.

Um die Werktrockenmörtel in die vorgesehene, von der Anwendung abhängige Verarbeitungsform zu überführen, wird eine vom Hersteller definierte produktspezifische Wassermenge in einem sauberen Gebinde (zum Beispiel ein Anrühreimer für Spachtelmassen) vorgelegt. Anschließend wird der Werktrockenmörtel in das vorgelegte Wasser kontinuierlich unter Mischen eingebracht. Wasser und Werktrockenmörtel werden mit einem geeigneten Rührwerk vermischt und zu einer homogenen und klumpenfreien Masse angerührt.

Das Einbringen der Pulverkomponente in das vorgelegte Anmachwasser ist in der Regel mit einer umfassenden Staubentwicklung verbunden. Auch beim Anmischen von Teilmengen eines Gebindes ist eine Staubentwicklung nicht zu vermeiden.

Neben der durch den Staub verursachten Verschmutzung der Umgebung, was insbesondere bei Renovierungen bewohnter oder genutzter Räume ein Problem darstellt, sind die feinen, teilweise alkalischen Stäube auch ein Gesundheitsrisiko für Verarbeiter und gegebenenfalls auch dritte Personen.

Darüber hinaus wird für die Überführung der pulverförmigen Spachtelmassen in die verarbeitungsfähige Konsistenz wie beschrieben Wasser benötigt. Dies steht unter Praxisbedingungen häufig nicht in der gewünschten Menge oder Temperatur zur Verfügung. Extreme Temperaturen (zu hoch und zu niedrig) sowie abweichende Wassermengen können zu Unsicherheiten bezüglich der Anwendung und der Performance der Spachtelmassen führen.

Falls Wasser zum Anmischen verfügbar ist, existieren mittlerweile technische Einrichtungen zur Einhaltung der produktspezifischen Wassermenge. Diese Einrichtungen ermöglichen das Befüllen von Anmischgebinden mit einer definierten, einstellbaren Wassermenge. Allerdings ist hierfür eine entsprechende Anschlussstelle und Schlauchverbindung auf der Baustelle erforderlich. Üblicherweise wird die Wassermenge mittels eines Wassereimers mit entsprechender Skalierung dosiert.

Um die oben beschriebene Staubbelastung auf Baustellen zu reduzieren gibt es im Bereich der Trockenmörtel verschiedene Ansätze. In keinem der bekannten Fälle ist es jedoch möglich, das Anfallen von Staub generell zu vermeiden, wodurch es auch aktuell keine Möglichkeit für gänzlich staubfreies Anmischen einer Spachtelmasse gibt.

Es existieren bereits Möglichkeiten zur Staubreduktion.

Beispielsweise kann dies durch eine Versetzung der Werktrockenmörtel mit einem Mineralöl erreicht werden. Hier wird im Zuge des Produktionsprozesses über Düsen ein geeignetes Mineralöl in einer dünnen Schicht auf das Trockenmörtelpulver appliziert. Die dadurch entstehenden Agglomerate reduzieren den Staubanfall bei der Behandlung des benetzten Pulvers im Vergleich zu einem nicht modifizierten Pulver. Beispielsweise beschreibt EP 1 846 342 die Verwendung von Kohlenwasserstoffen oder Kohlenwasserstoffgemischen als Additive zur Verminderung des Staubens trockener, insbesondere pulverförmiger bauchemischer Produkte, insbesondere hydraulisch abbindender oder zementbasierter Massen, wie Fliesenkleber, Fugenfüller, Spachtelmassen, Dichtschlämme und dergleichen. Vermieden werden kann das generelle Anfallen von Staub über diese Methode jedoch nicht.

Daneben besteht die Möglichkeit der Verwendung von Staubsaugern. Es existieren hier Vorrichtungen zur Montage von Staubsaugern auf einem geeigneten Anrührgefäß. Diese sind jedoch schwer zu handhaben und sind ebenfalls nicht in der Lage, das Entstehen von Stäuben gänzlich zu verhindern.

Eine noch weitere Methode zur Vermeidung der Staubentwicklung ist beispielsweise in EP 3 057 874 beschrieben. Hier ist eine Sacköffnungsvorrichtung zum Öffnen eines ein Sackgut beinhaltenden Sackes offenbart. Die Sacköffnungsvorrichtung wird auf einen speziell geeigneten Anrühreimer für Spachtelmassen aufgesetzt. Diese funktioniert, indem ein Gebinde (der Sack) der anzurührenden Spachtelmasse auf den vorbereiteten Anrühreimer gedrückt wird, wobei der Sack in der Mitte durch die Öffnungshilfe aufgeschnitten wird. Durch das Aufschneiden/Aufreißen des Gebindes rieselt die Spachtelmasse in das vorgelegte Anmachwasser. Das Gebinde selbst muss für einen bestimmten Zeitraum auf dem Eimer verbleiben und fungiert als "Deckel", der den durch das herabfallende Pulver entstehenden Staub zurückhält.

Weitere Möglichkeiten zur Reduktion der Staubbelastung auf Baustellen bei Einsatz von Spachtelmassen stellen flüssige Dispersions- oder Reaktionsharzbasierte Spachtelmassen dar.

Spachtelmassen auf wässriger Dispersionsbasis werden häufig gebrauchsfertig als flüssige oder pastöse Produkte angeboten. Diese Produkte werden überwiegend im Wandbereich zur Vorbereitung von Malerarbeiten eingesetzt.

Für Bodenanwendungen weisen Spachtelmassen auf wässriger Dispersionsbasis systembedingt Nachteile auf, die einen Einsatz verhindern. Da zur Trocknung Wasser abgegeben werden muss, sind lange Trocknungszeiten notwendig. Bei höheren Schichten härten diese Systeme oft nicht ganz durch. Darüber hinaus werden die für Bodenanwendungen notwendigen Endfestigkeiten nicht erreicht. Als weiterer Nachteil ist die mangelnde Saugfähigkeit dispersionsbasierter Spachtelmassen anzuführen. Dies verhindert den Einsatz von wässrigen Dispersionsklebstoffen zur Bodenbelagsverklebung auf Dispersionsspachtelmassen. Ein weiterer Nachteil dispersionsbasierter Spachtelmassen ist die nicht zufriedenstellende Dimensionsstabilität.

Ähnliche Nachteile ergeben sich auch bei Einsatz von Reaktionsharz-Spachtelmassen (überwiegend auf Epoxid- oder PU-Basis). Auch hier verhindert die mangelnde Saugfähigkeit bzw. die nicht gegebene Fähigkeit, Wasser von Dispersionsklebstoffen zu absorbieren, die funktionale Verklebung von Bodenbelägen. Darüber hinaus sind Epoxid- und PU-basierte Spachtelmassen insbesondere hinsichtlich des Arbeitsschutzes gegenüber konventionellen, zementären Spachtelmassen ungünstig. Dazu kommt ein wesentlich höherer Preis für den Endverbraucher, was deren Anwendung oft unwirtschaftlich macht.

EP 2 431 341 beschreibt eine alkali-aktivierbare, standfeste, zementäre Putzformulierung als Bestandteil eines Wärmedämmverbundsystems. Die Anwendung als selbstverlaufendes bzw. fließfähiges Produkt/Spachtelmasse wird nicht beschrieben.

US 10029944 beschreibt standfeste Fliesenklebemörtel und Fugenmassen auf Basis einer alkali-aktivierbaren Zementslurry. Die Anwendung als selbstverlaufende bzw. fließfähige Bodenspachtelmasse wird in diesem Dokument nicht beschrieben.

WO 2018/083010 beschreibt standfeste Reparaturmörtel und Mörtel zum Einsatz im 3-D-Druck auf Basis einer kommerziellen Zementslurry. Derartige standfeste Zusammensetzung sind ebenfalls nicht selbstverlaufend bzw. fließfähig.

WO 2017/076807 beschreibt eine nicht-selbstnivellierende, schnelltrockende 2-Komponenten-Dichtungsschlämme auf Basis einer alkali-aktivierbaren Zementslurry. Das Produkt enthält zur Anwendung als Dichtungsschlämme einen hohen Polymergehalt.

Demgegenüber liegt der vorliegenden Erfindung die Aufgabe zugrunde, eine selbstverlaufende, zementäre, staubfreie Spachtelmasse und ein Verfahren zur staubfreien Herstellung derselben zur Verfügung zu stellen. Der vorliegenden Erfindung liegt die weitere Aufgabe zugrunde, die üblicherweise mit dem Anmischen mit Wasser einhergehenden Probleme auf der Baustelle zu beseitigen und einen Kit zur Herstellung einer gebrauchsfertigen, selbstverlaufenden, zementären Spachtelmasse bereitzustellen.

### Beschreibung der Erfindung

Diese Aufgaben werden gelöst durch einen Kit zur Herstellung einer gebrauchsfertigen, selbstverlaufenden, zementären Spachtelmasse, umfassend wenigstens eine Komponente a) mit einer flüssigen, wasserhaltigen Spachtelmasse und wenigstens eine weitere Komponente b) mit wenigstens einer staubfreien, alkalischen Aktivator-Substanz, wobei die Komponente a) wenigstens einen elektrostatisch wirksamen Verflüssiger und einen sterisch wirksamen Verflüssiger enthält; sowie durch ein Verfahren zur staubfreien Herstellung einer gebrauchsfertigen, selbstverlaufenden, zementären Spachtelmasse umfassend die Schritte:
- Bereitstellen eines Kits nach einem der vorhergehenden Ansprüche,
- Vorlegen der Komponente a), und
- Einbringen der Komponente b) in die vorgelegte Komponente a) und Homogenisieren des Gemisches, sodass eine gebrauchsfertige, selbstverlaufende, zementäre Spachtelmasse entsteht.

Die vorliegende Erfindung stellt gegenüber den im Stand der Technik vorhandenen Ansätzen folgende Vorteile zur Verfügung: die bislang bei der Herstellung von fließfähigen, mineralischen Spachtelmassen zu beobachtende Staubentwicklung wird durch den erfindungsgemäßen Ansatz vermieden. Zudem ist das Herstellungsverfahren durch die Verwendung des erfindungsgemäßen Kits von einer externen Wasserzufuhr auf der Baustelle unabhängig.

Die vorliegende Erfindung ermöglicht insofern ein Verfahren zur Herstellung einer Spachtelmasse, das ohne jegliches Anfallen von Staub die Bereitstellung einer Spachtelschicht ermöglicht. Darüber hinaus wird baustellenseitig keine zusätzliche Wasserquelle benötigt und auch Mischfehler bei Nichteinhaltung der produktspezifischen Wassermenge können vermieden werden.

Auch weist die erfindungsgemäße, selbstverlaufende, zementäre Spachtelmasse hervorragende Selbstverlaufseigenschaften auf.

Erfindungsgemäß wird einer flüssigen Hauptkomponente a) lediglich eine weitere, vorzugsweise flüssige, Komponente b) hinzugefügt. Das Überführen einer Pulverkomponente/eines Werktrockenmörtels in Wasser entfällt somit komplett und es kommt zu keinerlei Staubentwicklung.

Hauptkomponente a) des erfindungsgemäßen Kits ist wie beschrieben eine flüssige Komponente, die lagerstabil ist und vor Aktivierung mit der Komponente b) keiner Aushärtungsreaktion unterworfen ist. Die Aktivierung/Initiierung der für die Festigkeitsentwicklung verantwortlichen Reaktion des Bindemittels in der Komponente a) erfolgt über eine Erhöhung des pH-Werts, was durch die Zugabe einer beliebigen geeigneten Alkaliquelle (Komponente b)) erfolgen kann. Diese wird vorzugsweise als wässrige Lösung zugegeben, kann neben flüssiger Form jedoch auch pastöse oder gepresste Form aufweisen.

Wie oben beschrieben betrifft die vorliegende Erfindung in einem ersten Aspekt einen Kit zur Herstellung einer gebrauchsfertigen, selbstverlaufenden, zementären Spachtelmasse, umfassend wenigstens eine Komponente a) mit einer flüssigen, wasserhaltigen Spachtelmasse und wenigstens eine weitere Komponente b) mit einer staubfreien, alkalischen Aktivator-Substanz, wobei die Komponente a) wenigstens einen elektrostatisch wirksamen Verflüssiger und einen sterisch wirksamen Verflüssiger enthält.

In einer bevorzugten Ausführungsform enthält die Komponente a) wenigstens einen elektrostatisch wirksamen Verflüssiger und einen sterisch wirksamen Verflüssiger in einem Masseverhältnis von 0,01:1 - 100:1, bevorzugt 0,1:1 - 10:1, besonders bevorzugt 0,5:1 - 5:1. Beispielsweise ist auch ein Verhältnis der beiden Verflüssiger von ca. 1:1 denkbar.

Einer der beiden erfindungsgemäß eingesetzten Verflüssiger ist ein elektrostatisch wirksamer Verflüssiger. Es sei auf die Dissertation von Christian Alexander Johannes Winter, *"Untersuchungen zur Verträglichkeit von Polycarboxylaten mit den Hydratationsverzögerern Citrat und Tartrat und zur Wirkung der Caseinfraktionen α-, β- und κ- Casein im ternären Bindemittelsystem Portlandzement-Tonerdeschmelzzement-Synthetischer Anhydrit",* 2007, Abbildung 19 verwiesen, worin der Effekt der elektrostatischen Abstoßung dargestellt ist.

Der andere Verflüssiger ist aus der Gruppe der sterisch wirksamen Verflüssiger ausgewählt. Die Verflüssigungswirkung beruht im Gegensatz zu den elektrostatisch wirksamen Verflüssigern nicht auf elektrostatischer Abstoßung, sondern auf einem durch die langen Seitenketten hervorgerufenen sterischen Effekt. Dieses Prinzip wird beispielsweise in Abbildung 20 der oben genannten Dissertation illustriert.

Der elektrostatisch wirksame Verflüssiger kann beispielsweise ein Verflüssiger auf Casein-Basis oder auf Melaminformaldehyd-/Naphthaleinformaldehyd-Basis sein (zum Beispiel kommerziell erhältlich u.a. von BASF Construction Polymers GmbH / Produktlinie z.B. "Melment), und/oder kann der sterisch wirksame Verflüssiger aus der Gruppe der Polycarboxylatether ausgewählt sein (zum Beispiel kommerziell erhältlich u.a. von BASF Construction Polymers GmbH / Produktlinie z.B. "Melflux").

Die Gesamtkonzentration der Verflüssiger in der Komponente a) kann 0,05-2,0 Massen-%, bevorzugt 0,1-1,5 Massen-%, besonders bevorzugt 0,2-1,2 Massen-% betragen. Beispielhafte Gesamtkonzentrationen können ca. 0,8 Massen-% betragen. Die Konzentrationsangaben sind bezogen auf die Gesamtmasse der Komponente a).

Der Begriff "Kit" ist vorliegend in seiner breitesten Form zu verstehen. Er beschreibt eine Gesamtheit von an sich unabhängigen Komponenten a) und b), die voneinander räumlich getrennt vorliegen können (aber nicht müssen). So wird es sich in der Praxis bei den Komponenten a) und b) um einzelne Gefäße bzw. Behälter handeln, beispielsweise feste Kunststoffbehälter, Glasgefäße oder Beutel aus Papier oder Kunststoff, die die jeweiligen Materialien (d. h. die wasserhaltige Spachtelmasse bzw. die staubfreie, alkalischen Aktivator-Substanz) enthalten. Bei den Gefäßen bzw. Behältern kann es sich um handelsübliche Produkte handeln.

Die Komponente a) umfasst in einer bevorzugten Ausführungsform mineralische Bindemittel auf Zementbasis und Gips (Calciumsulfat), Verflüssiger, Füllstoffe, Wasser, und Additive.

Beispielsweise können aluminiumhaltige Zemente eingesetzt werden, wie sie in US 2014/0343194 beschrieben sind: beispielhafte aluminiumhaltige Zemente sind Kombinationen von Aluminiumoxid Al₂O₃ mit Calciumoxid CaO, die mit einer oder mehreren kristallinen und/oder amorphen Phasen in solchen Mengen kombiniert werden, dass der Gewichtszusatz beider Bestandteile mindestens 20% bis 100% der Gesamtmasse des Aluminiumzement beträgt.

Aluminiumhaltiger Zement weist z.B. einen Aluminiumoxidgehalt auf, der ca. zwischen 40 und 70 Massen-% bezogen auf das Gesamtgewicht des aluminiumhaltigen Zements beträgt.

Eine erfindungsgemäß eingesetzte stabilisierte wässrige Suspension oder Zementslurry kann z.B. Folgendes umfassen: mindestens ein hydraulisches Bindemittel, umfassend Aluminiumzement wie oben definiert und mindestens ein Blockierungsmittel auf der Basis einer phosphorhaltigen Verbindung, ausgewählt aus Metaphosphorsäure, Phosphorsäure, Phosphonsäure und jede Verbindung, die irgendeine dieser Verbindungen durch Umsetzung mit Wasser bilden kann, wobei die Suspension 0,1 bis 20%, vorzugsweise 0,1 bis 15%, vorzugsweise 0,1 bis 10% und besonders bevorzugt 0,3 bis 10 Massen-% der phosphorhaltigen Verbindung umfasst, bezogen auf die Gesamtmasse des aluminiumhaltigen Zementes.

Erfindungsgemäß können beispielsweise Zementsuspensionen wie Exalt 60 H von Imerys Aluminates eingesetzt werden.

In einer bevorzugten Ausführungsform ist der Gipsbestandteil aus Calciumsulfat-Hemihydrat (Calciumsulfat-a-Hemihydrat und/oder Calciumsulfat-β-Hemihydrat), Calciumsulfat-Anhydrit, Calciumsulfat-Dihydrat und Mischungen von zwei oder mehreren davon ausgewählt. Vorzugsweise ist der Gipsbestandteil Calciumsulfat-Hemihydrat. Der Gipsbestandteil ist in einer Menge von 1 bis 40 Massen-%, bezogen auf die Gesamtmasse der flüssigen, wasserhaltigen, zementären Spachtelmasse der Komponente a), enthalten, insbesondere bevorzugt ist ein Gehalt von 3 bis 35 Massen-%, ganz besonders bevorzugt ist ein Gehalt von 5 bis 25 Massen-%.

Die Komponente a) enthält erfindungsgemäß eine *wasserhaltige* Spachtelmasse. Mit anderen Worten enthält die Komponente a) bereits die notwendige Menge Wasser, sodass zur Herstellung einer gebrauchsfertigen, selbstverlaufenden, zementären Spachtelmasse keine weitere externe Zugabe von Wasser erforderlich ist. Der Mengenanteil von Wasser in der flüssigen, wasserhaltigen Spachtelmasse der Komponente a) liegt üblicherweise im Bereich von 2-45 %, bevorzugt 5-30 % (bezogen auf die Gesamtmasse der flüssigen, wasserhaltigen, zementären Spachtelmasse der Komponente a)).

In der in Komponente a) enthaltenen Spachtelmasse können Füllstoffe in einer Menge von 5 bis 75, bevorzugt 10 bis 50 Massen-%, bezogen auf die Gesamtmasse der Komponente a), enthalten sein. Die Menge an Füllstoffen beträgt vorzugsweise 20 bis 45 Massen-%, insbesondere 15 bis 40 Massen. Beispiele für Füllstoffe sind Quarzsande, Kalkstein und Kalksteinmehle, Dolomit, Talk, Glimmer, sowie Leichtfüllstoffe wie z.B. Blähglasgranulate oder Blähtone. Darüber hinaus sind auch latent hydraulische Bestandteile wie Puzzolane, Flugaschen oder Hochofenschlacke geeignet. Die mittlere Korngröße des Füllstoffs beträgt vorzugsweise 0,0001 bis 10 mm, insbesondere 0,001 bis 8 mm. Bevorzugte Füllstoffe sind Sand oder Kalksteinmehl und Mischungen davon.

Auch können redispergierbare Dispersionspulver oder flüssige, wässrige Dispersionen in einer Menge von 0,1 bis 20 Massen-%, bezogen auf die Gesamtmasse der Komponente a), enthalten sein. Die Menge an redispergierbarem Dispersionspulver oder flüssiger, wässrige Dispersion beträgt vorzugsweise 0,5 bis 15 Massen-%, insbesondere 1,0 bis 10 Massen-%, bezogen auf die Gesamtmasse der in der Komponente a) enthaltenen Spachtelmasse.

Flüssige, wässrige Dispersionen bzw. redispergierbare Dispersionspulver können Polymere oder Copolymere auf Basis von Vinylaromaten, wie Styrol, Vinylestern von C1-C15 Alkylcarbonsäuren, Dienen, Estern der (Meth)acrylsäure mit C1-C12-Alkanolen, Vinylhalogeniden und/oder Olefinen sein. Bevorzugt sind Vinylestern von C1-C15 Alkylcarbonsäuren, Copolymeren von Vinylestern von C1-C15 Alkylcarbonsäuren mit Olefinen oder Copolymeren von Estern der (Meth)acrylsäure mit C1-C12-Alkanolen mit Styrol. Als Beispiele seien Ethylen-Vinylacetat-Copolymere, Ethylen- Vinylversatat-Copolymere oder Styrolacrylate genannt.

Vorzugsweise verwendet man als redispergierbares Dispersionspulver oder in der flüssigen Dispersion ein Polymer oder Copolymer mit einer Mindestfilmbildetemperatur (MFT) im Bereich von etwa -5 °C bis etwa +10 °C.

Zusätzlich enthalten sein kann mindestens ein Additiv in einer Menge von 0,01 bis 7 Massen-%, vorzugsweise 0,1 bis 5 Massen-%, bezogen auf die Gesamtmasse der flüssigen, wasserhaltigen, zementären Spachtelmasse der Komponente a). Vorzugsweise ist das Additiv ausgewählt unter Abbindeverzögerern, Abbindebeschleunigern, Verdickern, Stabilisatoren, Kunststofffasern, Entschäumern, Luftporenbildnern, Dispergier-/Netzmitteln, Hydrophobierungs-mittel und Mischungen davon.

Beispiele für Verdicker sind mineralische Schichtsilikate wie Bentonit oder Talkum. Stabilisatoren können organische Stabilisatoren beispielsweise Polysaccharide wie Stärkeether, Guar Gum, Xanthan Gum und Celluloseether und modifizierte Celluloseether, zum Beispiel Methylcellulose, Ethylcellulose, Propylcellulose und Methylethylcellulose, Hydroxylalkylcellulose wie Hydroxyethylcellulose (HEC), Hydroxypropylcellulose (HPC) und Hydroxyethylhydroxypropylcellulose, Alkylhydroxyalkyl-cellulose wie Methylhydroxyethylcellulose (MHEC), Methylhydroxypropylcelluose (MHPC) und Propylhydroxypropylcellulose, oder Polycarbonsäuren wie Polyacrylsäure sowie Polyvinylalkohole sein. Abbindeverzögerer sind beispielsweise Fruchtsäuren (Weinsäure oder Zitronensäure), Phosphate, Polyphosphate, Alkaligluconate, Saccharide oder Alkali-Tartrate. Geeignete Abbindebeschleuniger sind zum Beispiel Alkalicarbonate, Natriumsulfat, Kaliumsulfat oder Calciumsulfat-Dihydrat. Beispiele für Kunststofffasern sind Polyolefinfasern mit einer Länge von 0,1 bis 1 mm, insbesondere Polypropylenfasern. Weitere Beispiele hierfür sind Polyacrylnitrilfasern. Beispiele für Entschäumer sind modifizierte Siloxane auf anorganischen Trägermaterialien. Hydrophobierende Additive sind beispielsweise Salze langkettiger Fettsäuren oder Organosiliciumverbindungen.

Alle hierin beschriebenen Prozentangaben entsprechen Massenprozent, soweit nichts anderes angegeben ist.

Der erfindungsgemäße Kit enthält zudem eine Komponente b) mit wenigstens einer staubfreien, alkalischen Aktivatorsubstanz. Der Aktivator ist vorzugsweise ausgewählt aus Calciumhydroxid, Calciumoxid, Natriumhydroxid, Kaliumhydroxid, Alkaliwassergläsern und Mischungen davon. Insbesondere bevorzugt ist Calciumhydroxid.

Der oder die Aktivatoren werden zugegeben, um den pH-Wert der wasserhaltigen, flüssigen Spachtelmasse der Komponente a) zu erhöhen. Beispielsweise ist die Menge an Aktivator in der Komponente b) so gewählt, dass sie ausreichend ist, um nach Vermischen mit der wasserhaltigen Spachtelmasse der Komponente a) einen pH-Wert von 8 bis 13 einzustellen. Insbesondere bevorzugt ist es, wenn durch die Zugabe des Aktivators ein pH-Wert von 9 bis 12 eingestellt werden kann.

Der pH Wert der gebrauchsfertigen Spachtelmasse lässt sich durch jedes geeignete Verfahren zur pH Messung von Spachtelmassen bestimmen. Die Bestimmung des pH erfolgt z.B. in Anlehnung an die Norm EN 13454-2:2003, Punkt 4.1. Diese Norm betrifft gipsbasierte Spachtelmassen, ist jedoch analog auch für zementäre Produkte anwendbar.

Gemäß der Norm EN 13454-2:2003 wird 1 Massen-Teil der gebrauchsfertigen, fließfähigen Spachtelmasse in 10 Teilen deionisiertem oder destilliertem Wasser verdünnt. Die erhaltene Lösung wird 5 min gerührt, und anschließend der pH mit einem pH-Messgerät oder einem pH Papier auf 0,5 genau abgelesen. Als pH-Messgerät kann hier beispielsweise das Knick Labor-pH-Meter 766 eingesetzt werden. Als pH-Indikatorpapier können Merck Millipore pH Indikatorpapier Universalindikator oder Merck Millipore MColorpHast® pH Indicator strips pH 0-14 Einsatz finden.

Der Aktivator ist in der gebrauchsfertigen, selbstverlaufenden, zementären Spachtelmasse vorzugsweise in einer Menge von 0,01 bis 5 Massen-%, bezogen auf die Gesamtmasse der Komponenten a) und b) enthalten. Vorzugsweise ist der Aktivator in einer Menge von 0,1 bis 2 Massen-%, bezogen auf die Gesamtmasse, in der gebrauchsfertigen Formulierung enthalten.

Die staubfreie, alkalische Aktivator-Substanz der Komponente b) kann beispielsweise in Pellet- oder pastöser Form vorliegen. In einer bevorzugten Ausführungsform liegt die Aktivator-Substanz in Form einer wässrigen Lösung vor. Dies erleichtert die Herstellung der gebrauchsfertigen, fließfähigen Spachtelmasse durch Homogenisieren der Komponenten a) und b).

Gemäß einem weiteren Aspekt betrifft die vorliegende Erfindung ein Verfahren zur staubfreien Herstellung einer gebrauchsfertigen, selbstverlaufenden, zementären Spachtelmasse umfassend die Schritte:
- Bereitstellen eines Kits nach einem der vorhergehenden Ansprüche,
- Vorlegen der Komponente a), und
- Einbringen der Komponente b) in die vorgelegte Komponente a) und Homogenisieren des Gemisches, sodass eine gebrauchsfertige, selbstverlaufende, zementäre Spachtelmasse entsteht.

Wie bereits oben beschrieben beträgt der pH der gebrauchsfertigen Spachtelmasse nach Homogenisieren des Gemisches 8-13, bevorzugt 9-12.

Bei der erfindungsgemäß hergestellten gebrauchsfertigen, fließfähigen Spachtelmasse handelt es sich um eine sogenannte "selbstverlaufende" Spachtelmasse. Grundsätzlich wird zwischen selbstverlaufenden (selbstnivellierenden) Spachtelmassen und standfesten (nicht verlaufenden) Spachtelmassen unterschieden. Das Fließverhalten von selbstverlaufenden Spachtelmassen wird über das Ausbreitmaß bestimmt.

Die Bestimmung des Ausbreitmaßes zur Unterscheidung von selbstverlaufenden von standfesten Spachtelmassen erfolgt gemäß DIN EN 12706. So kann beispielsweise eine Unterscheidung zwischen selbstverlaufenden und standfesten Spachtelmassen wie folgt erfolgen:
Bei diesem Prüfverfahren wird das Ausbreitmaß eines bekannten Volumens einer BodenSpachtelmasse gemessen, die aus einem starren Rohr ausgeflossen ist. Der Durchmesser der ausgebreiteten Mischung wird nach einer festgelegten Zeit gemessen.

### Prüfeinrichtungen und Materialien:

1. Rohr, hergestellt aus glattem, korrosionsbeständigem Metall, mit dem Innendurchmesser (30 ± 0,1) mm und der Höhe (50 ± 0,1) mm.
2. Glasplatte, sauber und trocken, z.B. 300 mm x 300 mm x 6 mm.
3. Stoppuhr, mit einer Fehlergrenze 1 s.
4. Längenmeßgerät, mit Stricheinteilung 1 mm.
5. Raumklima (23 ± 2)°C und (50 ± 5) % relativer Luftfeuchte

### Durchführung

Das Rohr ist zentral auf eine Glasplatte zu stellen, die sich auf einer festen waagerechten Unterlage befindet. Nach Beendigung des Standardmischverfahrens nach EN 1937 ist das Rohr bis zum Rand mit der Mischung zu füllen. Sofort nach dem Füllen des Rohres ist die Stoppuhr zu starten, der Zylinder gleichzeitig von der Glasplatte zu heben, innerhalb von 2 s senkrecht bis zu einer Höhe von 50 mm bis 100 mm emporzuheben und dann 10 s bis 15 s entleeren zu lassen. Nach mindestens 4 min ist der Durchmesser der ausgebreiteten Mischung mit dem Längenmeßgerät in zwei Richtungen, die im rechten Winkel zueinander stehen, zu messen.

Typische Ausbreitmaße von selbstverlaufenden Spachtelmassen sind hierbei ca. 130 - 170 mm Als Untergrenze für selbstverlaufende Spachtelmassen gilt erfindungsgemäß: Ausbreitmaß > 110 mm; in Abgrenzung hiervon beträgt üblicherweise das Ausbreitmaß für gießfähige Massen ca. 60 - 100 mm; für standfeste Spachtelmassen beträgt das Ausbreitmaß üblicherweise 0 mm bzw. 30 mm (30 mm entspricht dem Innendurchmesser des Rings, siehe oben).

In einem weiteren Aspekt betrifft die vorliegende Erfindung die Verwendung eines wie oben beschriebenen Kits zur Herstellung einer Spachtelschicht.

Die folgenden Figuren und die folgenden Beispiele dienen zur Erläuterungen der Erfindung.

### Beispiele

### Beispiel 1: Herstellung der erfindungsgemäßen, selbstverlaufenden Spachtelmasse und Vergleich mit einem Produkt des Stands der Technik

Im Folgenden werden die Arbeitsschritte aufgeführt, welche notwendig sind, um eine für die entsprechende Anwendung geeignete selbstverlaufende, zementäre Spachtelmasse gebrauchsfertig herzustellen und zu verwenden. Verglichen werden hier eine marktübliche, selbstverlaufende Spachtelmasse (Produkt 1) und eine der Erfindung entsprechende gebrauchsfertige, selbstverlaufende, zementäre Spachtelmasse (Formulierung 1 + Aktivator).

**Tabelle 1: Vergleich Stand der Technik zur erfindungsgemäßen gebrauchsfertigen, selbstverlaufenden, zementären Spachtelmasse einer Spachtelmasse**

| | **Marktübliche, selbstverlaufende, zementäre Spachtelmasse, z.B. UZIN NC 150 (= Produkt 1)** | **Gebrauchsfertige, selbstverlaufende, zementäre Spachtelmasse gemäß der Erfindung (= Formulierung 1 + Aktivator)** |
|---|---|---|
| Benötigte Materialien | **Abbildung 1****:** | **Abbildung 2****:** |
| | Vorgelegt werden 400 g zementäres Spachtelmassenpulver (Produkt 1) und 100 g Anmachwasser. | Vorgelegt werden 500 g der bereits fließfähigen Formulierung 1 und 10 g flüssige Aktivatorsubstanz. |
| Zusammenführen der beiden Komponenten | **Abbildung 3****:** | **Abbildung 4****:** |
| | Beim Einschütten des Spachtelmassenpulvers entstehen deutliche Staubschwaden, welche sich in der Umgebung verteilen | Beim Einschütten der Aktivatorsubstanz in die Formulierung 1 findet keine Staubentwicklung statt. |
| Gebrauchsfertige Spachtelmasse nach erfolgter Homogenisierung der beiden vermischten Komponenten mit einem Vollrathrührer bei ca. 600 u/min. | **Abbildung 5****:** | **Abbildung 7****:** |
| | Ausgießen der selbstverlaufenden, zementäre Spachtelmasse (Produkt 1) | Ausgießen der gebrauchsfertigen, selbstverlaufenden, zementären Spachtelmasse gemäß der Erfindung |
| | **Abbildung 6****:** | **Abbildung 8****:** |
| | Ausbreiten der selbstverlaufenden, zementären Spachtelmasse (Produkt 1) | Ausbreiten der gebrauchsfertigen, selbstverlaufenden, zementäre Spachtelmasse gemäß der Erfindung |
| Produkt 1 = zementäres Spachtelmassenpulver | | |
| Formulierung 1 = wasserhaltige zementäre Spachtelmasse (= Komponente a) der Erfindung) | | |
| Aktivator = Komponente b) der Erfindung | | |

Nach dem jeweiligen Anrühren / Homogenisieren sind beide Systeme gebrauchsfertig und können für vergleichbare Arbeiten zur Herstellung einer Spachtelschicht herangezogen werden.

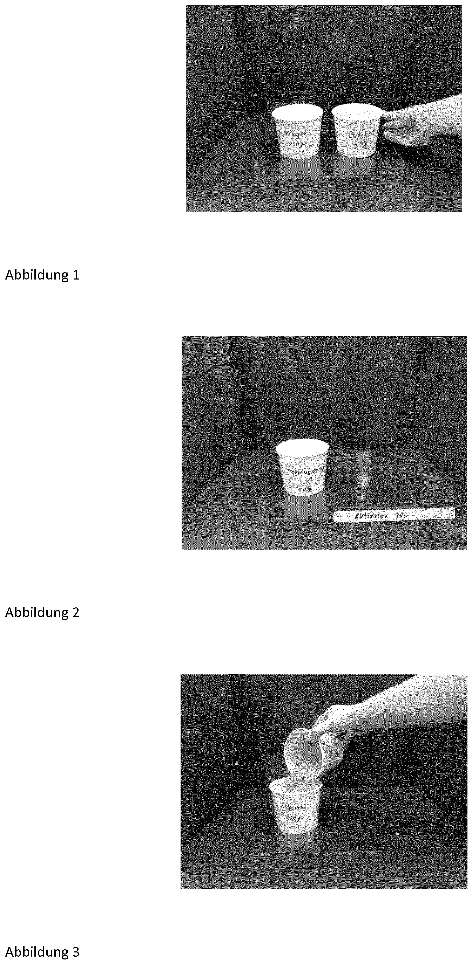

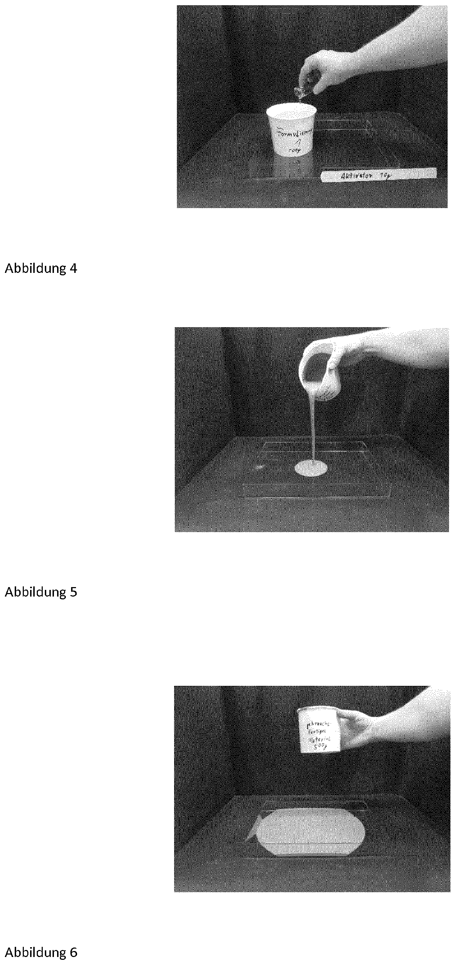

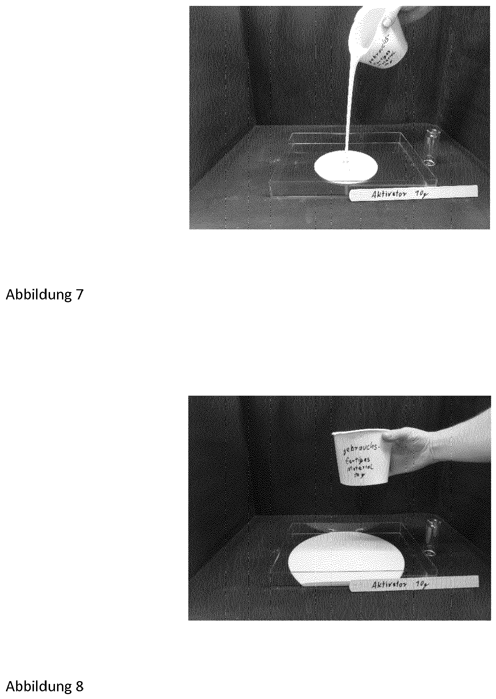

Die in Tabelle 1 angeführten Abbildungen 1-8 zeigen auf, dass durch den erfindungsgemäßen Ansatz eine gebrauchsfertige, selbstverlaufende, zementäre Spachtelmasse zur Herstellung einer Spachtelschicht erzielt werden kann, wobei eine Staubentwicklung gänzlich vermieden wird. Darüber hinaus ist erfindungsgemäß die Bereitstellung von Anmachwasser gegenüber dem Stand der Technik nicht notwendig.

Die erfindungsgemäße gebrauchsfertige, selbstverlaufende, zementäre Spachtelmasse ist sowohl bezüglich der Festigkeitsentwicklung als auch hinsichtlich des Kristallgefüges mit marktüblichen, selbstverlaufenden, zementären Spachtelmassen vergleichbar.

Die Saugfähigkeit und auch die Sauggeschwindigkeit - als notwendige Voraussetzung für eine funktionale und schadensfreie Verklebung von Bodenbelägen - erreicht für die erfindungsgemäße Spachtelmasse ein Niveau, welches mit marktüblichen, selbstverlaufenden, zementären Spachtelmassen vergleichbar ist und welches durch Epoxidharz- und PU-basierte Spachtelmassen nicht erreicht werden kann.

In Tabelle 2 sind Beispielrezepturen der in Tabelle 1 aufgezeigten Spachtelmassen enthalten.

**Tabelle 2: Beispielrezepturen**

| **Marktübliche, selbstverlaufende, zementäre Spachtelmasse, UZIN NC 150** | | **Gebrauchsfertige, selbstverlaufende Spachtelmasse gemäß der Erfindung** | |
|---|---|---|---|
| **Anorganische Bindemittel** | | | |
| Zement | 15 - 30 % | Zementsuspension (Exalt 60 H) | 25 - 45% |
| Gipsbestandteil | 5 - 15 % | Gipsbestandteil | 5 - 15 % |

| **Füllstoffe** | | | |
|---|---|---|---|
| Sande | 30 - 60 % | Sande | 15 - 40 % |
| Kreiden | | Kreiden | |

| **Wasser** | | | |
|---|---|---|---|
| 0 | | 10 - 25 % (in Komponente a)) | |

| **organische Bindemittel** | | | |
|---|---|---|---|
| Redispersionspulver | 1 - 10% | Redispersionspulver, Flüssigdispersionen | 1 - 15 % |

| **Verflüssiger und Additive** | | | |
|---|---|---|---|
| Verflüssiger Beschleuniger Weitere Additive | ^{∼}2% | Verflüssiger 1, Verflüssiger 2 | ^{∼}2% |
| | | Beschleuniger Weitere Additive | |

| **Weitere benötigte Materialien** | | | |
|---|---|---|---|
| Anmachwasser | 25%* | Alkalische Aktivator-Substanz | ^{∼}2%** |

| | | | |
|---|---|---|---|
| Prozentangaben entsprechen Massenprozent *Massenprozent bezogen auf Gesamtmasse des marktüblichen, zementären Spachtelmassepulvers ** Massenprozent bezogen auf Gesamtmasse der gebrauchsfertigen, selbstverlaufenden, zementären Spachtelmasse gemäß der Erfindung | | | |

### Beispiel 2: Effekt der Verflüssiger auf die Verlaufseigenschaften der Spachtelmassen

In diesem Beispiel wird der Effekt der erfindungsgemäßen Kombination wenigstens eines elektrostatisch wirksamen Verflüssigers und wenigstens eines sterisch wirksamen Verflüssigers auf die Verlaufseigenschaften der Spachtelmasse gezeigt. Tabelle 3 zeigt Ergebnisse, die mittels des oben genannten Verfahrens zur Bestimmung des Ausbreitmaßes erzielt wurden.

Bei Verflüssiger 1 handelt es sich um einen Verflüssiger auf Melaminformaldehyd-/ Naphtaleinformaldehyd-Basis, Verflüssiger 2 ist ein Verflüssiger auf Polycarboxylatether-Basis.

| **Probenbezeichnung (gebrauchsfertige Spachtelmasse bestehend aus Komponenten a) und b))** | **Durchmesser Auslauf in mm** | Verflüssiger 1 Elektrostatisch Wirksam (Dosierung M-% bezogen auf die Gesamtmasse der Komponente a)) | Verflüssiger 2 Sterisch Wirksam (Dosierung M-% bezogen auf die Gesamtmasse der Komponente a)) |
|---|---|---|---|
| Gebrauchsfertige Spachtelmasse **ohne Verflüssiger** | 95 | | |
| Gebrauchsfertige Spachtelmasse sterisch wirksamer **Verflüssiger** | **105** | | 0,4 |
| Gebrauchsfertige Spachtelmasse sterisch wirksamer **Verflüssiger** | **105** | | 0,8 |
| Gebrauchsfertige Spachtelmasse elektrostatisch wirksamer **Verflüssiger** | **105** | 0,4 | |
| Gebrauchsfertige Spachtelmasse elektrostatisch wirksamer **Verflüssiger** | **100** | 0,8 | |
| Gebrauchsfertige, fließfähige Spachtelmasse gemäß der Erfindung **Kombination zweier Verflüssiger** | **135** | 0,4 | 0,4 |

Es zeigt sich, dass die Verlaufseigenschaften über eine Kombination zweier Verflüssiger überraschenderweise beeinflusst werden können: eine Kombination der Verflüssiger 1 und 2 wirkt sich vorteilhaft auf die Verlaufseigenschaften der erfindungsgemäßen, gebrauchsfertigen Spachtelmassen aus. Die gebrauchsfertigen Spachtelmassen ohne Verflüssiger bzw. mit lediglich einem Verflüssigertyp in Tab. 3 können gemäß der oben genannten Definition nicht als selbstverlaufende Spachtelmassen bezeichnet werden (selbstverlaufende Spachtelmassen weisen wie hierin definiert ein Ausbreitmaß von > 110 auf).

Nur durch die Kombination der Verflüssiger 1 und 2 wird ein Auslaufdurchmesser > 130 mm erreicht, welcher nach obiger Definition typisch für eine selbstverlaufende Spachtelmasse ist. Die Zugabe eines einzelnen Verflüssigers erreicht diesen Effekt nicht. Interessanterweise kann bei Einsatz lediglich eines Verflüssigers auch durch Konzentrationserhöhung kein zusätzlicher Verflüssigungseffekt mehr erzielt werden: im Falle des elektrostatisch wirksamen Verflüssigers 1 wird durch Erhöhung der Konzentration sogar ein geringeres Ausbreitmaß erzielt. Durch Kombination des Verflüssigers 1 und Verflüssigers 2 können bei vergleichbaren Konzentrationen deutlich höhere Ausbreitenmaße erzielt werden, wie sie für erfindungsgemäße selbstverlaufende Spachtelmassen charakteristisch sind.

## Patentansprüche

1. Kit zur Herstellung einer gebrauchsfertigen, selbstverlaufenden, zementären Spachtelmasse, umfassend wenigstens eine Komponente a) mit einer flüssigen, wasserhaltigen, zementären Spachtelmasse und wenigstens eine weitere Komponente b) mit wenigstens einer staubfreien, alkalischen Aktivator-Substanz, wobei die Komponente a) wenigstens einen elektrostatisch wirksamen Verflüssiger und einen sterisch wirksamen Verflüssiger enthält.

2. Kit nach Anspruch 1, wobei die Komponente a) wenigstens einen elektrostatisch wirksamen Verflüssiger und einen sterisch wirksamen Verflüssiger in einem Masseverhältnis von 0,01:1 - 100:1, bevorzugt 0,1:1 - 10:1, besonders bevorzugt 0,5:1 - 5:1 enthält.

3. Kit nach Anspruch 1 oder 2, wobei der elektrostatisch wirksame Verflüssiger ein Verflüssiger auf Casein-Basis oder Melaminformaldehyd-/Naphthaleinformaldehyd-Basis ist, und/oder der sterisch wirksame Verflüssiger aus der Gruppe der Polycarboxylatether ausgewählt ist.

4. Kit nach einem oder mehreren der vorhergehenden Ansprüche, wobei die Gesamtkonzentration der Verflüssiger in der Komponente a) 0,05-2,0 Massen-%, bevorzugt 0,1-1,5 Massen-%, besonders bevorzugt 0,2-1,2 Massen-% beträgt.

5. Kit nach einem oder mehreren der vorhergehenden Ansprüche, wobei die Komponente a) ein mineralisches Bindemittel auf Zement-Basis und Gips, Füllstoffe, Wasser, und Additive umfasst.

6. Kit nach einem oder mehreren der vorhergehenden Ansprüche, wobei die Komponente b) eine wässrige, alkalische Aktivator-Substanz ist.

7. Kit nach einem oder mehreren der vorhergehenden Ansprüche, wobei die Komponente b) dazu geeignet ist, in der gebrauchsfertigen, selbstverlaufenden, zementären Spachtelmasse einen pH-Wert von 8-13, bevorzugt 9-12, einzustellen.

8. Verfahren zur staubfreien Herstellung einer gebrauchsfertigen, selbstverlaufenden, zementären Spachtelmasse umfassend die Schritte:
- Bereitstellen eines Kits nach einem der vorhergehenden Ansprüche,
- Vorlegen der Komponente a), und
- Einbringen der Komponente b) in die vorgelegte Komponente a) und Homogenisieren des Gemisches, sodass eine gebrauchsfertige, selbstverlaufenden, zementären Spachtelmasse entsteht.

9. Verfahren nach Anspruch 8, wobei der pH der Spachtelmasse nach Homogenisieren des Gemisches 8-13, bevorzugt 9-12, beträgt.

10. Verwendung eines Kits nach einem oder mehreren der vorhergehenden Ansprüche zur Herstellung einer Spachtelschicht.
